# EUROPÄISCHE PATENTSCHRIFT

(11) **EP 2 421 692 B1**
(45) Veröffentlichungstag und Bekanntmachung des Hinweises auf die Patenterteilung: **25.02.2015**
(21) Anmeldenummer: 11702027.1
(22) Anmeldetag: 01.02.2011
(51) Int. Cl.: B29C 65/20, E06B 3/96

(54) **VORRICHTUNG UND VERFAHREN ZUM VERSCHWEIßEN VON PROFILTEILEN**
DEVICE AND METHOD FOR WELDING PROFILED PARTS
DISPOSITIF ET PROCÉDÉ DE SOUDAGE DE PIÈCES PROFILÉES

(30) Priorität: 22.03.2010 DE 102010012359
(43) Veröffentlichungstag der Anmeldung: 29.02.2012
(73) Patentinhaber: Rotox Besitz- und Verwaltungsgesellschaft mbH, 65611 Brechen (DE)
(72) Erfinder: EISENBACH, Bernd, 65611 Brechen (DE); SCHMITT, Hans, 66877 Rammstein (DE)
(74) Vertreter: Müller, Eckhard
(86) Internationale Anmeldenummer: PCT/EP2011/051396
(87) Internationale Veröffentlichungsnummer: WO 2011/117007

(56) Entgegenhaltungen:
- EP-A1- 2 255 942
- DE-A1- 19 629 302
- DE-A1- 19 832 397
- DE-U1- 9 413 889
- US-A1- 2008 223 526

## Beschreibung

Die Erfindung betrifft eine Vorrichtung zum Verschweißen von Profilteilen, insbesondere von Kunststoffprofilteilen, mit zumindest einem Schweißkopf, der relativ zu einem anderen Schweißkopf und/oder relativ zu einer Haltevorrichtung in einer vorgegebenen oder vorgebbaren Schweißsollposition positionierbar ist.

Die Erfindung betrifft außerdem ein Verfahren zum Verschweißen von Profilteilen, insbesondere von Kunststoffprofilteilen

Vorrichtungen der einleitend genannten Art werden insbesondere zum Verschweißen von PVC-Profilstäben zu Fensterrahmen oder Türrahmen verwendet. Eine solche Vorrichtung ist beispielsweise aus DE 195 06 236 A1 bekannt. Diese Vorrichtung weist vier Schweißköpfe zum gleichzeitigen Herstellen der vier Eckverbindungen eines Rahmens auf.

Die Stabilität der Fenster aus PVC wird über die Schweißverbindung der Ecke, über den PVC-Profilstab selbst und über Armierungsstähle, die in die PVC-Profilstäbe eingeschoben und mit diesen verschraubt werden, erreicht.

Das SKZ (Süddeutsche-Kunststoff-Zentrum) hat in den letzten beiden Jahren einen Forschungsauftrag mit dem Thema "Erhöhung und Bewertung der Wirtschaftlichkeit beim Schweißen von PVC-Fensterprofilen" durchgeführt und festgestellt, dass im Grunde bei der Anwendung von höheren Schweißtemperaturen, die Angleich- und Anwärmzeiten deutlich reduziert werden können. Allerdings gibt es derzeit keine Erkenntnisse, wie diese Forschungsergebnisse in der Praxis genutzt werden könnten.

Die Profilstäbe werden vor dem Verschweißen auf Gehrung und auf die erforderliche Länge zugeschnitten und anschließend in die Schweißvorrichtung eingelegt. Beim Zuschnitt sind derzeit Genauigkeiten von ca. +/- 0,5 mm erreichbar und Genauigkeiten von ca. +/- 1 mm üblich, wobei Ungenauigkeiten innerhalb der Schnittfläche selbst von ca. +/- 0,2 mm bis ca. +/- 0,3 mm ebenso vorkommen, wie Ungenauigkeiten hinsichtlich des Gehrungswinkels.

Das eigentliche Verschweißen der Profilteile geschieht durch Anschmelzen und anschließendes Fügen der Profilstabenden. Beim Schmelzen und Fügen der Profilstabenden wird ein Teil des angeschmolzenen Materials verdrängt, der der Profilstablänge verloren geht. Dieser Teil wird als Maßzugabe bezeichnet.

Die Einstellung, insbesondere die Positionierung der Schweißköpfe, erfolgt bei den aus dem Stand der Technik bekannten Vorrichtungen ausschließlich nach den theoretischen Sollmaßen der Profilstäbe für den zu verschweißenden Rahmen. Demgemäß fahren die Schweißköpfe elektronisch gesteuert fest vorgegebene Punkte für die Herstellung eines Rahmens an und werden dort arretiert.

Insbesondere zum Ausgleich der Längentoleranzen der Profilstäbe wird üblicherweise an jedem Profilstabende eine Maßzugabe von ca. 3 mm - also bezogen auf den gesamten Profilstab insgesamt von ca. 6mm - eingeplant, was beim Zuschnitt der Profilstäbe zu berücksichtigen ist. Demgemäß beträgt die Anschmelzzeit der Profilstabenden durch Kontakt der Profilstabenden mit sogenannten Heizspiegeln je nach dem zu verarbeitenden Profil, durchschnittlich ca. 30 Sekunden (+/- 15 %). Die Fügezeit, also die Zeit, in der die angeschmolzenen Profilstabenden gegeneinander gepresst werden, beträgt je nach zu verarbeitendem Profil, ebenfalls durchschnittlich ca. 30 Sekunden (+/- 15 %). Hierbei kann es vorkommen, dass bei hohen Heizspiegeltemperaturen eine Veränderung des Materials, insbesondere eine Zersetzung oder Verbrennung, verursacht wird, was letztlich optische Beeinträchtigungen und herabgesetzte Bruchwerte zur Folge hat. Die Gefahr solcher unerwünschter Veränderungen ist umso größer, je länger die Hitzeeinwirkung andauert und je höher die Temperatur ist.

Aus DE 196 29 302 A1 ist eine Vorrichtung zum Verbinden von Profilteilen aus Kunststoff, insbesondere für Fenster-, Blendrahmen o. dgl., durch Schweißen mit mindestens zwei, vorzugsweise vier Schweißaggregaten bekannt. Jedes Schweißaggregat weist einen beweglichen Profilanschlag zum Ausrichten der eingelegten Profile auf. Für jeden Profilanschlag ist eine am zugehörigen Schweißaggregat angeordnete, den Profilanschlag jeweils jeden der gegenüber dem Schweißaggregat auszurichtenden Profile einzeln zustellende und von diesem wegbewegende Zentriereinrichtung zum Zentrieren der Profile vorgesehen.

Aus DE 196 35 955 A1 ist eine Schweißmaschine zum Verschweißen von bevorzugt Kunststoffprofilteilen bekannt, bei der eine Justierplatte vorgesehen ist, deren Dicke veränderbar ist.

US 2008/223526 A1 offenbart eine Vorrichtung und ein Verfahren zum Verschweißen von Profilen, wobei die Vorrichtung derart ausgebildet ist, dass die bei einem Fügen von zwei Profilen entstehenden Gräte vermieden werden sollen. Die Vorrichtung weist vier Schweißköpfe auf. Diese Schweißköpfe werden vor einem Fügen in eine Schweißsollposition bewegt. Die Profile werden in Halteeinheiten gelagert. Die Halteeinheiten werden in eine Sollposition gefahren, bei der die Profile nicht in Kontakt mit der Heizeinheit sind. Im Anschluss daran werden die Halteeinheiten in eine Position gefahren, bei der die Profile die Heizeinheit kontaktieren. Dabei werden die Endseiten der beiden sich bezogen auf die Heizeinheit gegenüberliegenden Profile gegen die Heizeinheit gedrückt.

Die vorgenannten aus dem Stand der Technik bekannten Vorrichtungen erlauben es, auch Profilteile zu verwenden, die eine Maßabweichung aufweisen. Das Zulassen dieser Maßabweichungen durch einen beweglich angeordneten Profilanschlag bzw. durch einen dickenverstellbaren Profilanschlag führt jedoch nachteiliger Weise dazu, dass die Profilteile bezogen auf den Schweißkopf, insbesondere bezogen auf den Heizspiegel des Schweißkopfes versetzt und/oder unsymmetrisch angeordnet sind. Dies führt in weiter nachteiliger weise dazu, dass die miteinander zu verschweißenden Profilteilenden jeweils einen unterschiedlichen Anschmelzprozeß durchlaufen. Bspw. kann es vorkommen, dass ein Profilteil stärker und zeitlich länger gegen den Heizspiegel gedrückt wird, als das Profilteil mit dem es verschweißt werden soll. Die Folge sind Verschweißungen mit herabgesetztem Festigkeitswert. Im schlimmsten Fall kann es sogar vorkommen, dass zumindest bei einem der Profilteilenden die erwähnte Zersetzung oder Verbrennung des Kunststoffes eintritt.

Es ist daher die Aufgabe der vorliegenden Erfindung eine Vorrichtung und ein Verfahren zum Verschweißen von Profilteilen anzugeben, die bzw. das eine Verkürzung des Schweißprozesses und eine Verringerung der nötigen Maßzugabe ermöglicht und die bzw. das die Gefahr von Materialveränderungen reduziert.

Die Aufgabe wird durch eine Vorrichtung zum Verschweißen von Profilteilen gemäß Anspruch 1 gelöst.

In verfahrensmäßiger Hinsicht wird die Aufgabe durch ein Verfahren zum Verschweißen von Profilteilen, insbesondere von Kunststoffprofilteilen, gelöst, das durch folgende Schritte gekennzeichnet ist:
a. Festlegen einer Schweißsollposition für einen Schweißkopf und/oder eines Teils des Schweißkopfes,
b. Positionieren des Schweißkopfes oder des Teils eines Schweißkopfes, jedoch zumindest eines Heizelementes, insbesondere eines Heizspiegels in einem vorgegebenen oder vorgebbaren Toleranzbereich um die Schweißsollposition, wobei der Abstand des Schweißkopfs bzw. der Teile des Schweißkopfes zu der Schweißsollposition von zumindest einer Maßabweichung eines Profilteiles von einem Sollmaß abhängt,
c. Anschmelzen der zu verschweißenden Profilteile und
d. Aneinanderfügen der angeschmolzenen Profilteile.

Erfindungsgemäß wurde erkannt, dass das Zulassen geringfügiger Maßtoleranzen - zumindest vor dem Schweißprozess - für das durch Verschweißen herzustellende Produkt, ganz erhebliche Vorteile hinsichtlich der Schmelz- und Fügezeiten und auch hinsichtlich der Gefahr von unerwünschten Materialveränderungen erreichbar sind. Beispielsweise können bei der Herstellung von Fenster- oder Türrahmen Abweichungen der Rahmenaußenmaße von ca. 0,5 mm - angesichts eines Spaltmaßes von ca. 12 mm zwischen Flügel- und Blendrahmen - ohne weiteres hingenommen werden, ohne dass es zu technischen Einschränkungen in der Funktion oder Verwendbarkeit der Fenster bzw. Türen kommt. Jedoch können die Schmelz- und Fügezeiten (bei etwa gleicher oder teilweise erhöhter Festigkeit der hergestellten Verbindung) ganz erheblich reduziert werden. Hierdurch wird auch die Herstellzeit insgesamt reduziert, so dass in dergleichen Zeiteinheit eine größere Anzahl Fenster- oder Türrahmen hergestellt werden kann.

Bei einer ganz besonders vorteilhaften Ausführung, die im Detail weiter unten beschrieben ist, ist es jedoch auch möglich, die anfänglich zugelassenen Maßtoleranzen während des Schweißprozesses zu beseitigen oder zumindest zu verringern. Bei dieser Ausführung liegt demgemäß ein doppelter Vorteil vor, nämlich einerseits der Vorteil schneller und effizienter herstellen zu können und andererseits der Vorteil einer besonderen Maßgenauigkeit.

Erfindungsgemäß sind der Schweißkopf und/oder ein Teil des Schweißkopfes zumindest jedoch ein Heizelement des Schweißkopfes zum Anschmelzen der Profilteile, insbesondere ein Heizspiegel, automatisch in einem räumlichen Toleranzbereich um die Schweißsollpositionvorzugsweise innerhalb der Auflagenebene - positionierbar. Erfindungsgemäß kann insbesondere vorgesehen sein, dass die Vorrichtung eine Ausgleichsvorrichtung aufweist, die den Schweißkopf und/oder den Teil des Schweißkopfes in Abhängigkeit von zumindest einer Maßabweichung zumindest eines der Profilteile in einem räumlichen Toleranzbereich um die Schweißsollposition positioniert oder bewegt. Besonders vorteilhaft ist eine Ausführung, bei der die Ausgleichsvorrichtung die Positionierung innerhalb des Toleranzbereichs automatisch oder selbsttätig vornimmt. Beim Einsatz der erfindungsgemäßen Vorrichtung sind kleinere Maßzugaben möglich, als die Maßzugaben die beim Einsatz der aus dem Stand der Technik bekannten Vorrichtungen nötig sind. Demgemäß sind wesentlich kürzere Anschmelzzeiten bzw. Angleichzeiten erforderlich. Es sind erfindungsgemäß und vorteilhaft sogar so kurze Anschmelzzeiten (wenige Sekunden) ermöglicht, dass die Profilteilenden ohne Materialveränderungen sogar bei höheren Heizspiegeltemperaturen erwärmt werden können, was bei den aus dem Stand der Technik bekannten Anschmelzzeiten ohne unerwünschte Materialveränderungen weitestgehend unmöglich ist.

Bei einer ganz besonders vorteilhaften Ausführung erfolgt die Positionierung innerhalb des Toleranzbereichs - vorzugsweise automatisch - derart, dass der Abstand der jeweils miteinander zu verschweißenden Profilteilenden zum Heizelement, insbesondere zu einem Heizspiegel, gleich ist. Insbesondere kann vorgesehen sein, dass die Positionierung innerhalb des Toleranzbereichs - vorzugsweise automatischderart erfolgt, dass der Abstand der jeweils miteinander zu verschweißenden Profilteilenden zum Heizspiegel zeitlich vor dem Prozess des Anschmelzens, insbesondere zeitlich vor dem Annähern der Profilteilenden an das Heizelement, insbesondere einen Heizspiegel, gleich ist. Außerdem kann in erfindungsgemäßer Weise vorteilhaft vorgesehen sein, dass die Bewegungen der miteinander zu verschweißenden Profilteilenden während des Anschmelzens, insbesondere das Annähern an das Heizelement, und/oder während des Fügens synchron und/oder relativ zum Heizelement, spiegelsymmetrisch erfolgen. Durch eine oder mehrere dieser Vorgehensweisen ist vorteilhaft erreicht, dass die miteinander zu verschweißenden Profilteilenden genau denselben Prozess, insbesondere denselben Anschmelz - und/oder Fügeprozess, durchlaufen.

Insoweit ist der Nachteil der aus dem Stand der Technik bekannten Verfahren und Vorrichtungen, nämlich dass die miteinander zu verschweißenden Profilteilenden jeweils einen unterschiedlichen Anschmelzprozess durchlaufen, weitgehend vermieden. Vorteilhafter Weise ist insbesondere vermieden, dass ein Profilteilende bereits am Heizspiegel anliegt, während sich das mit diesem Profilteilende zu verschweißende Profilteilende - beispielsweise wegen eines größeren Ausgangsabstandes - noch auf dem Weg zum Heizspiegel befindet und/oder dass ein Profilteilende noch am Heizspiegel anliegt, während sich das mit diesem Profilteilende zu verschweißende Profilteilende bereits wieder vom Heizspiegel weg bewegt. Die bei denen aus dem Stand der Technik bekannten Verfahren und Vorrichtungen auftretende Situation, nämlich dass ein Profilteilende länger als nötig am Heizspiegel anliegt, weil gewissermaßen gewartet werden muss, bis das mit diesem Profilteilende zu verschweißende Profilteilende ebenfalls fertig angeschmolzen ist, kann in erfindungsgemäßer Weise wie beschrieben wirkungsvoll vermieden werden.

Bei einer besonders universell einsetzbaren Ausführung der erfindungsgemäßen Vorrichtung ist vorgesehen, dass die Größe des Toleranzbereichs vorgebbar und/oder einstellbar ist. Hierdurch kann die Vorrichtung individuell an die Anforderungen des herzustellenden Produktes und an die individuellen Materialeigenschaften der einzusetzenden Profilteile angepasst werden.

Der Abstand eines Schweißkopfes bzw. der Abstand des Teils des Schweißkopfes innerhalb des Toleranzbereichs von der Sollposition hängt erfindungsgemäß von zumindest einer Maßabweichung eines der zu verschweißenden Profilteile von einem Sollmaß ab.

Demgemäß kann die Positionierung beispielsweise dadurch erfolgen, dass die Maßabweichung eines zu verschweißenden Profilteiles zunächst - vorzugsweise durch direkte Messung -quantitativ ermittelt wird, um anschließend aktiv - beispielsweise mit einer motorgetriebenen Stellvorrichtung, die Teil der Ausgleichsvorrichtung sein kann, die Positionierung innerhalb des Toleranzbereichs vorzunehmen. Zur quantitativen Erfassung der Maßabweichung kann beispielsweise eine mechanische und/oder optische und/oder elektronische Tastvorrichtung vorgesehen sein. Die Positionierung kann beispielsweise auch beim Fügeprozess selbst erfolgen.

Alternativ oder zusätzlich kann erfindungsgemäß auch vorgesehen sein, dass die Positionierung passiv, nämlich durch mechanische Orientierung an den Außenkonturen des Profilteils mit Hilfe von Anschlägen und Führungen erfolgt.

Bei einer besonderen Ausführung ist eine Positioniereinrichtung vorgesehen, mit der der Schweißkopf bzw. der Teil des Schweißkopfes zunächst in der Schweißsollposition positioniert wird und bei der anschließend, beispielsweise während des Fügeprozesses, eine Positionierung innerhalb des Toleranzbereiches, insbesondere durch Steuerung und /oder Regelung der Antriebe, erfolgt. Es kann jedoch auch vorgesehen sein, dass die Positioniereinrichtung eine Schweißsollposition anfährt und währenddessen bereits die Feinpositionierung innerhalb des Toleranzbereichs stattfindet. Für beide Varianten kann vorteilhaft vorgesehen sein, dass der Schweißkopf und/oder der Teil des Schweißkopfes zumindest jedoch ein Heizelement des Schweißkopfes zum Anschmelzen der Profilteile, insbesondere ein Heizspiegel, innerhalb des Toleranzbereichs relativ zur Positioniereinrichtung beweglich - insbesondere federelastisch - gelagert sind.

Bei einer besonders zuverlässigen und präzise arbeitenden Vorrichtung ist der Schweißkopf und/oder der Teil des Schweißkopfes, zumindest jedoch ein Heizelement des Schweißkopfes zum Anschmelzen der Profilteile, insbesondere ein Heizspiegel, innerhalb des Toleranzbereichs gegen die Kraft einer Federvorrichtung relativ zur Schweißsollposition und/oder relativ zur Positioniereinrichtung beweglich gelagert.

Hierbei kann beispielsweise vorgesehen sein, dass sich der Schweißkopf und/oder der Teil des Schweißkopfes zur Positionierung innerhalb des Toleranzbereiches an zumindest einem in die Vorrichtung eingelegten Profilteil abdrückt und/oder abstützt. Alternativ oder zusätzlich kann auch vorgesehen sein, dass ein in die Vorrichtung eingelegtes Profilteil den Schweißkopf und/oder der Teil des Schweißkopfes gegen die Kraft der Federeinrichtung bewegt oder dass ein in die Vorrichtung eingelegtes Profilteil den Schweißkopf - vorzugsweise selbsttätig oder automatisch - innerhalb des Toleranzbereichs positioniert.

Bei einer besonderen Ausführung als Mehrkopfvorrichtung sind an den Schweißköpfen mehrere - vorzugsweise vier - Federelemente angebracht, die eine Ausrichtung der Kopfposition beispielsweise im Bereich von ca. +/- 0,5 mm zulassen. Die Federelemente sind dafür vorgesehen, Solllängenabweichungen der Profilteile in diesem Umfang aufzunehmen und auszugleichen. D.h.: ist ein Profilteil an einer Stelle des Querschnitts beispielsweise um 0,2 mm länger als die Solllänge, verschiebt sich ein Schweißkopf oder zumindest ein Teil des Schweißkopfes, zumindest jedoch ein Heizelement des Schweißkopfes zum Anschmelzen der Profilteile, insbesondere ein Heizspiegel, beim Fügeprozess automatisch in Richtung der Solllängenabweichung des Profilstabs um diesen Betrag. Ist ein Profilteil hingegen beispielsweise um 0,3 mm kürzer als die vorgegebene Solllänge, drückt das Federelement den Schweißkopf oder zumindest den Teil des Schweißkopfes um die Solllängenabweichung von 0,3 mm in die entgegengesetzte Richtung. Die endgültige Schweißkopfposition wird demgemäß an der tatsächlichen Profilteillänge orientiert.

Die Federelemente können an den Schweißköpfen selbst angebracht sein, so dass sich der gesamte Schweißkopf bzw. der Teil des Schweißkopfes bei der Positionierung an der Profilteillänge orientiert bzw. orientieren. Alternativ oder zusätzlich können die Federelemente an den Schweißwerkzeugen und/oder den seitlichen Profilanlagen und/oder dem Profilanschlag angebracht sein, so dass beispielsweise nur die Position einer Profilanlage im Verhältnis zur Stablänge eines Profilteils verändert wird. Hierbei kann auch der Profilanschlag jeweils mit einer Profilanlage gekoppelt sein.

Zur Begrenzung der Maßabweichungen des herzustellenden Produktes ist bei einer vorteilhaften Ausführung eine Warnvorrichtung vorgesehen, die ein Warnsignal ausgibt, wenn der Schweißkopf und/oder der Teil des Schweißkopfes außerhalb des Toleranzbereichs positioniert ist bzw. sind. Alternativ oder zusätzlich kann vorgesehen sein, dass die Warnvorrichtung, ein Warnsignal ausgibt, wenn bei einer Vermessung eines Profilteils festgestellt wird, dass das Profilteil eine für den vorgesehenen Toleranzbereich zu große Maßabweichung von einem Sollmaß aufweist oder wenn die Ausgleichsvorrichtung zeitlich vor einem Positioniervorgang auf Grund der Maßabweichung zumindest eines der Profilteile ermittelt, dass eine Positionierung außerhalb des Toleranzbereichs einzustellen wäre.

Die erfindungsgemäße Vorrichtung kann vorteilhaft als Mehrkopf-, insbesondere als Vierkopfvorrichtung, ausgebildet sein. Demgemäß können mehrere Schweißköpfe vorgesehen sein, die prinzipiell jeweils relativ zu einem anderen Schweißkopf und/oder relativ zu einer Haltevorrichtung in unterschiedlichen, vorgegebenen oder vorgebbaren Schweißsollpositionen positionierbar sind, wobei die Schweißköpfe und/oder jeweils ein Teil der Schweißköpfe, zumindest jedoch ein Heizelement des Schweißkopfes zum Anschmelzen der Profilteile, insbesondere ein Heizspiegel, erfindungsgemäß zusätzlich jeweils in Abhängigkeit von zumindest einer Maßabweichung zumindest eines der Profilteile von einem vorgegebenen oder vorgebbaren Sollmaß in jeweils einem räumlichen Toleranzbereich um die Schweißsollposition positionierbar sind. Insbesondere kann vorgesehen sein, dass eine Ausgleichsvorrichtung - vorzugsweise selbsttätig oder automatisch - die Schweißköpfe bzw. die Teile der Schweißköpfe in Abhängigkeit von zumindest einer Maßabweichung innerhalb des Toleranzbereichs positioniert.

Bei einer ganz besonders vorteilhaften Ausführung weist die Vorrichtung mehrere Schweißköpfe auf, wobei einer der Schweißköpfe ortsfest angeordnet ist und/oder anordenbar ist und wobei die übrigen Schweißköpfe und/oder ein Teil der übrigen Schweißköpfe, zumindest jedoch ein Heizelement des Schweißkopfes zum Anschmelzen der Profilteile, insbesondere ein Heizspiegel, jeweils in Abhängigkeit von zumindest einer Maßabweichung zumindest eines der Profilteile von einem Sollmaß in jeweils einem räumlichen Toleranzbereich um jeweils eine Schweißsollposition positionierbar und/oder beweglich sind.

Beispielsweise kann vorgesehen sein, dass ein Schweißkopf relativ zu einem Grundgestell ortsfest angeordnet ist und/oder anordenbar ist und dass die übrigen Schweißköpfe in erfindungsgemäßer Weise jeweils in einem eigenen räumlichen Toleranzbereich um jeweils eine Schweißsollposition positionierbar und/oder beweglich sind. Auf diese Weise wird erfindungsgemäß der Aufwand zur Verwirklichung der Positionierbarkeit bzw. Beweglichkeit innerhalb jeweils eines Toleranzbereichs reduziert. Hierbei wurde erkannt, dass es im Ergebnis ausschließlich auf die relative Positionierbarkeit bzw. Beweglichkeit der Schweißköpfe (bzw. der Teile der Schweißköpfe) zueinander ankommt.

Eine Maßabweichung im Sinne dieser Erfindung kann beispielsweise die Abweichung von einer vorgegebenen und/oder vorgebbaren Solllänge und/oder die Abweichung von einem vorgegebenen und/oder vorgebbaren Gehrungswinkel und/oder die Abweichung von einer vorgegebenen und/oder vorgebbaren Ebenheit einer Schnittfläche sein.

Bei einer ganz besonders vorteilhaften Ausführung ist vorgesehen, dass die zeitlich vor einem Schweißprozess noch zugelassenen Maßtoleranzen während des Schweißprozesses beseitigt werden oder zumindest zu verringert werden. Insbesondere kann diesbezüglich erfindungsgemäß vorgesehen sein, dass der Schweißprozess, insbesondere der Prozess des Anschmelzens und/oder der Prozess des Fügens, derart gesteuert wird, dass auf den zunächst in einem Toleranzbereich um eine Schweißsollposition positionierten Schweißkopf oder auf das Teil des Schweißkopfes während des Anschmelzens und/oder während des Fügens eine in Richtung auf die Sollposition gerichtete Kraft wirkt, um zumindest eine Maßabweichung eines Profilteils von einem Sollmaß zumindest zu verringern oder vollständig zu beseitigen.
Es kann diesbezüglich alternativ oder zusätzlich auch vorgesehen sein, dass der Schweißprozess, insbesondere der Prozess des Anschmelzens und/oder der Prozess des Fügens, derart gesteuert ist, dass auf die jeweils zunächst in einem Toleranzbereich um ihre Schweißsollpositionen positionierten Schweißköpfe bzw. die Teile der Schweißköpfe während des Anschmelzens und/oder während des Fügens jeweils eine in Richtung auf die jeweilige Sollposition gerichtete Kraft wirkt, um zumindest eine Maßabweichung eines Profilteils von einem Sollmaß zumindest zu verringern oder vollständig zu beseitigen.

Die auf den Schweißkopf bzw. auf den Teil des Schweißkopfes während des Schweißprozesses zur Verringerung und/oder Beseitigung von Maßabweichungen der Profilteile einwirkende Kraft kann beispielsweise pneumatisch und/oder hydraulisch und/oder mittels eines Spindelsystems aufgebracht werden. Insbesondere kann einevorzugsweise elektronische - Steuerung vorgesehen sein, die bei Erreichen der Sollposition die Krafteinwirkung abschaltet und/oder die bereits bei Annäherung an die Sollposition die einwirkende Kraft reduziert. In einer einfachen, aber zuverlässigen und robusten Ausführung ist vorgesehen, dass die Sollposition durch einen oder mehrere mechanische Anschläge festgelegt ist und dass die Kraft den Schweißkopf bzw. den Teil des Schweißkopfes während des Schweißens solange verschiebt, bis der Anschlag bzw. bis die Anschläge erreicht sind und so ein Weiterverschieben über die Sollposition hinaus verhindert ist.

Bei einer besonders vorteilhaften Ausführung wird der Schweißprozess, insbesondere der Prozess des Anschmelzens und/oder der Prozess des Fügens, derart gesteuert, dass der zunächst in einem Toleranzbereich um eine Schweißsollposition positionierte Schweißkopf bzw. den Teil des Schweißkopfes während des Anschmelzens und/oder während des Fügens seine bzw. ihre Schweißsollposition erreicht bzw. erreichen oder sich dieser zumindest nähert bzw. nähern.

Insbesondere kann der Schweißprozess, insbesondere der Prozess des Anschmelzens und/oder der Prozess des Fügens, erfindungsgemäß auch derart gesteuert werden, dass die jeweils zunächst in einem Toleranzbereich um ihre Schweißsollpositionen positionierte Schweißköpfe bzw. die Teile der Schweißköpfe während des Anschmelzens und/oder während des Fügens ihre Schweißsollposition erreichen oder sich dieser zumindest nähern.

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: das Arbeitsprinzip einer erfindungsgemäßen Vorrichtung an einem Schweißkopf,
- Fig. 2: schematisch eine als Vierkopfschweißmaschine ausgeführte erfindungsgemäße Vorrichtung,
- Fig. 3: schematisch eine andere Ausführung einer erfindungsgemäßen Vorrichtung,
- Fig. 4: schematisch eine weitere Ausführung einer erfindungsgemäßen Vorrichtung,
- Fig. 5: schematisch am Beispiel eines Schweißkopfes eine andere Möglichkeit zur Verwirklichung einer anderen erfindungsgemäßen Vorrichtung,
- Fig. 6: eine Detailansicht einer erfindungsgemäßen Vorrichtung,
- Fig. 7: eine Detaildarstellung einer weiteren erfindungsgemäßen Vorrichtung,
- Fig. 8: eine Detaildarstellung einer anderen erfindungsgemäßen Vorrichtung,
- Fig. 9: eine Detaildarstellung der anderen erfindungsgemäßen Vorrichtung mit einem eingelegten, zu langem Profilteil,
- Fig. 10: eine Detaildarstellung der anderen erfindungsgemäßen Vorrichtung mit einem eingelegten, zu kurzen Profilteil,
- Fig. 11: eine Detaildarstellung der anderen erfindungsgemäßen Vorrichtung mit einem eingelegten, maßgenauem Profilteil und
- Fig. 12: eine Detaildarstellung einer speziellen erfindungsgemäßen Vorrichtung.

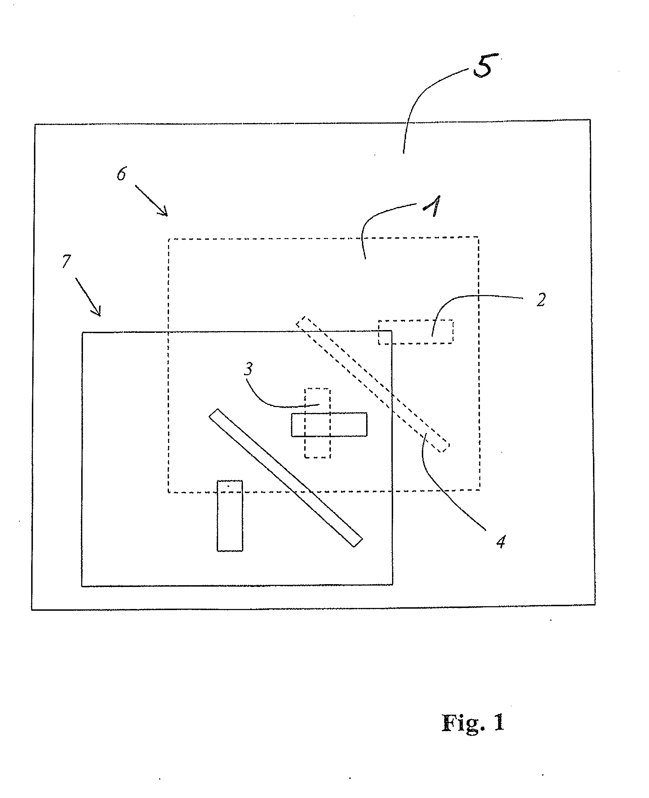

Fig. 1 zeigt das Arbeitsprinzip einer erfindungsgemäßen Vorrichtung an einem Schweißkopf 1. Die dargestellten Schweißköpfe sind der Übersichtlichkeit halber lediglich ganz schematisch mit zwei seitlichen Profilanlagen 2, 3 und einem Profilanschlag 4 dargestellt. Bei den aus dem Stand der Technik bekannten Vorrichtungen wird der Schweißkopf 1 vollkommen unabhängig von Maßabweichungen der zu verschweißenden Profilteile in einer Schweißsollposition, die in der Figur gestrichelt dargestellt ist, positioniert. Im Gegensatz hierzu wird bei der erfindungsgemäßen Vorrichtung der Schweißkopf 1 (und/oder Teile des Schweißkopfes) in Abhängigkeit von zumindest einer Maßabweichung zumindest eines der zu verschweißenden Profilteile (hier nicht gezeigt) von einem Sollmaß in einem räumlichen Toleranzbereich 5 um die Schweißsollposition 6 (gestrichelt) positioniert. Die tatsächliche Positionierung 7 innerhalb des Toleranzbereichs 5 ist mit ausgezogenen Linien dargestellt. Die dargestellte Positionierung entspricht einer Situation, bei der das an der ersten Profilanlage 2 anliegende Profilteil (nicht dargestellt) länger als das Sollmaß ist und das an der zweiten Profilanlage 3 anliegende Profilteil (nicht dargestellt) kürzer als das Sollmaß ist.

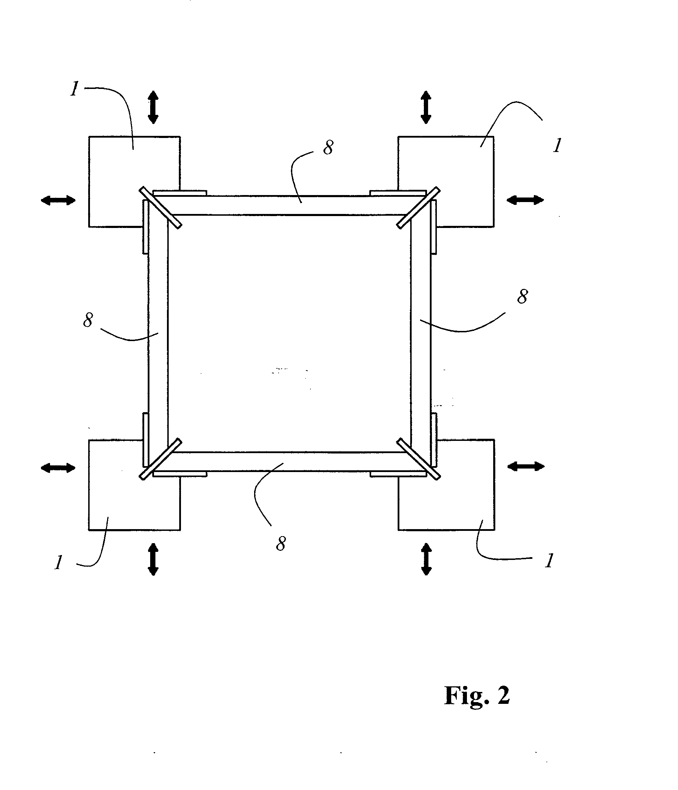

Fig. 2 zeigt schematisch eine als Vierkopfschweißmaschine ausgeführte erfindungsgemäße Vorrichtung. Bei dieser Vorrichtung sind alle vier Schweißköpfe 1 relativ zu einem nicht dargestellten Grundgestell jeweils in Abhängigkeit von zumindest einer Maßabweichung zumindest eines der Profilteile 8 in jeweils einem räumlichen Toleranzbereich um die jeweilige Schweißsollposition positionierbar oder beweglich sind, was durch die Doppelpfeile angedeutet ist.

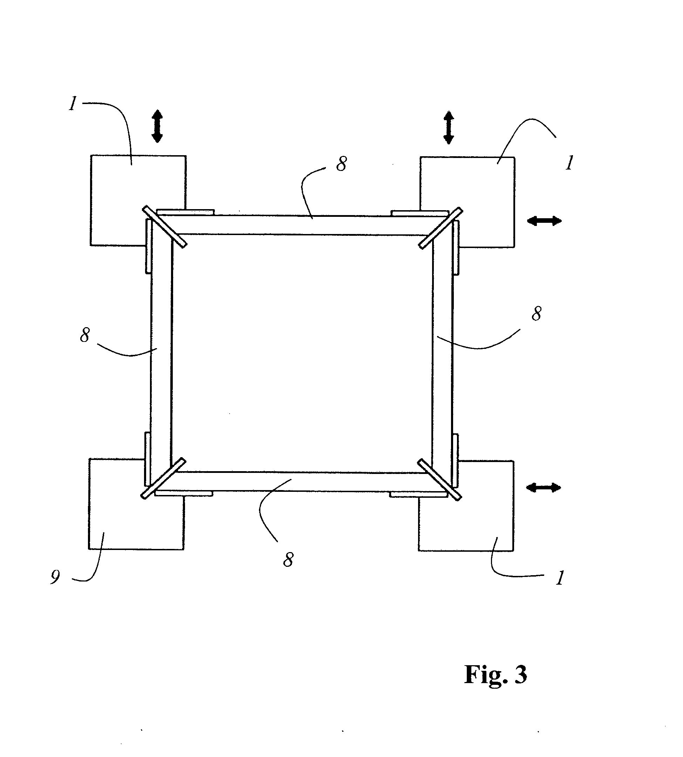

Fig. 3 zeigt schematisch eine andere Ausführung einer erfindungsgemäßen Vorrichtung, bei der ein erster Schweißkopf 9 ortsfest angeordnet ist und bei der die übrigen Schweißköpfe 1 jeweils in Abhängigkeit von zumindest einer Maßabweichung zumindest eines der Profilteile 8 von einem Sollmaß in jeweils einem räumlichen Toleranzbereich um jeweils eine Schweißsollposition positionierbar und/oder beweglich sind. Diese Ausführung arbeitet genauso zuverlässig, wie die in Fig. 2 gezeigte Vorrichtung. Jedoch ist der Aufwand zur Verwirklichung der Positionierbarkeit bzw. Beweglichkeit innerhalb jeweils eines Toleranzbereichs insoweit reduziert, als nur drei Schweißköpfe 1 entsprechend ausgerüstet und ausgebildet sein müssen.

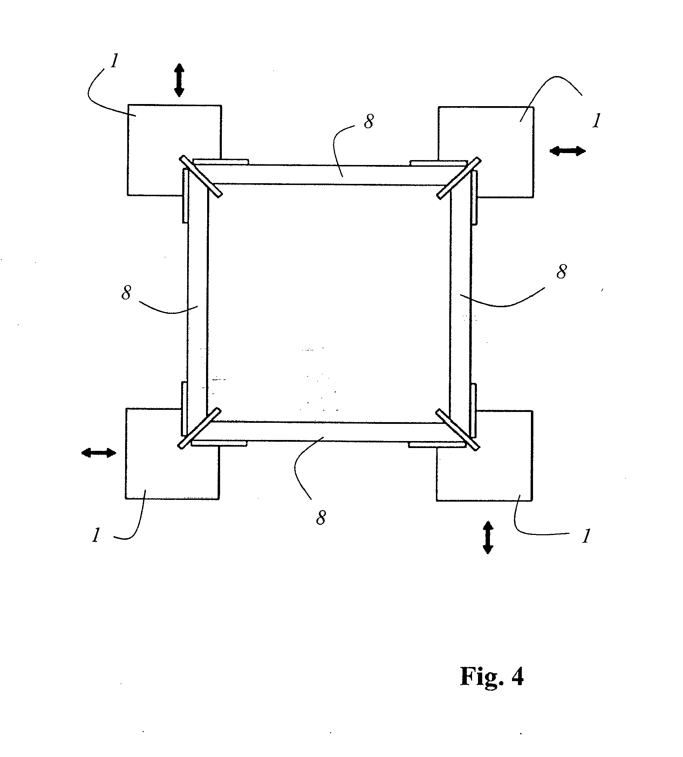

Fig. 4 zeigt schematisch eine andere Ausführung einer erfindungsgemäßen Vorrichtung, bei der jeder Schweißkopf 1 linear verschiebbar gelagert ist, wobei die Verschieberichtungen von diagonal gegenüberliegenden Schweißköpfen zueinander parallel sind. Diese Ausführung hat den besonderen Vorteil, dass aufwendige zweiachsige Lagerungen, die beispielsweise Kreuztische erfordern, ohne Einschränkung der Funktionalität vermieden sind.

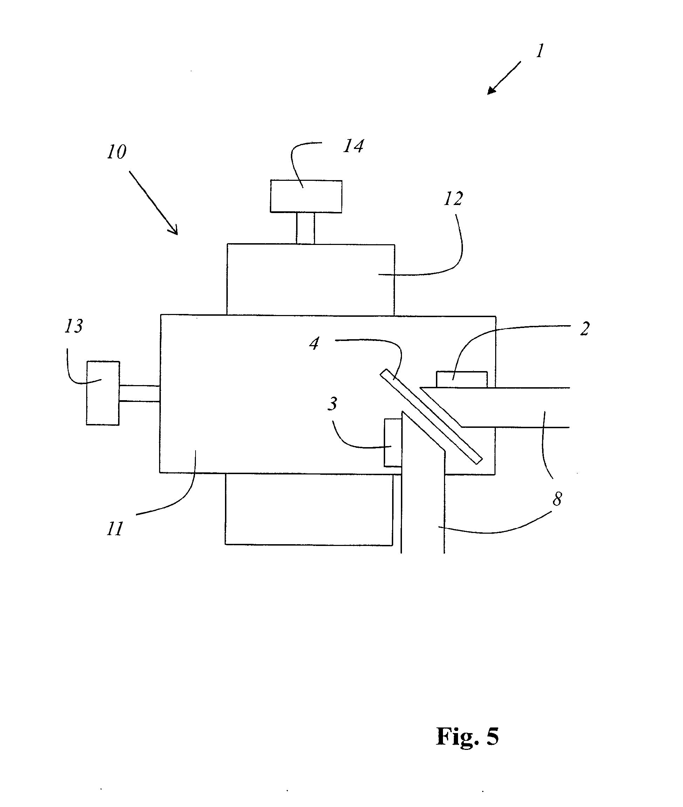

Fig. 5 zeigt schematisch am Beispiel eines Schweißkopfes 1 eine andere Möglichkeit zur Verwirklichung einer anderen erfindungsgemäßen Vorrichtung. Der Schweißkopf 1 weist einen X-Y-Tisch 10 mit einem Grundtisch 11 und einem Kreuztisch 12 auf, wobei der Grundtisch 11 mit Hilfe eines ersten Antriebs 13 in einer ersten Richtung verschiebbar ist und wobei der Kreuztisch 12 zusammen mit dem Grundtisch 11 mit Hilfe eines zweiten Antriebs 14 senkrecht zur ersten Richtung in einer Auflageebne verschiebbar ist. Auf dem Grundtisch 11 sind zwei Profilanlagen 2, 3 befestigt mit denen die zu verschweißenden Profilteile 8, 9 durch Verschieben des Kreuztisches 4 und des Grundtisches 3 gegen einen Profilanschlag gedrückt werden können. Die Antriebe 13, 14 werden in Abhängigkeit von Maßabweichungen der Profilteile von Sollmaßen automatisch gesteuert, um die Teile des Schweißkopfes 1 innerhalb des Toleranzbereichs zu positionieren.

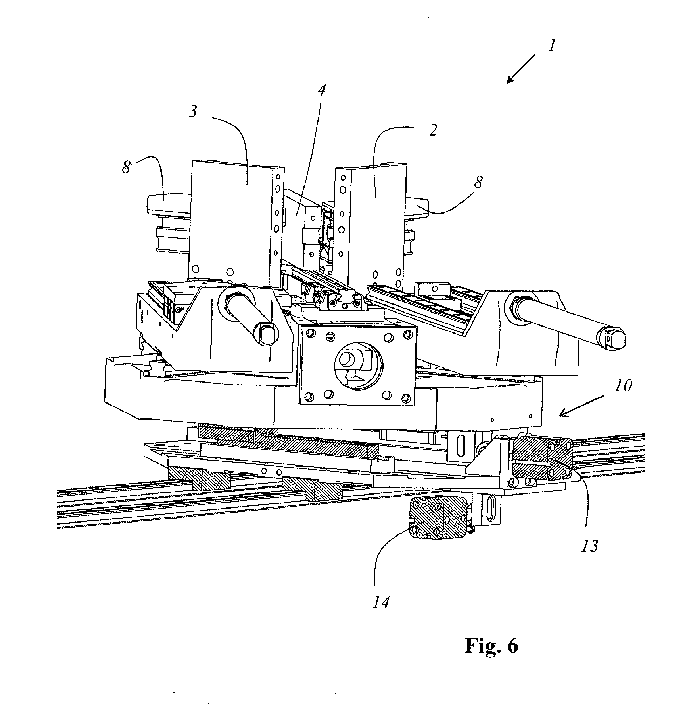

Fig. 6 zeigt eine Detailansicht einer erfindungsgemäßen Vorrichtung mit einem Kreuztisch 10 und mit Antrieben 13, 14 zur Positionierung des Schweißkopfes 1 innerhalb eines Toleranzbereichs. Deutlich zu erkennen sind insbesondere ein Profilanschlag 4 und zwei zeitliche Profilanlagen 2, 3 für die zu verschweißenden Profilteile 8.

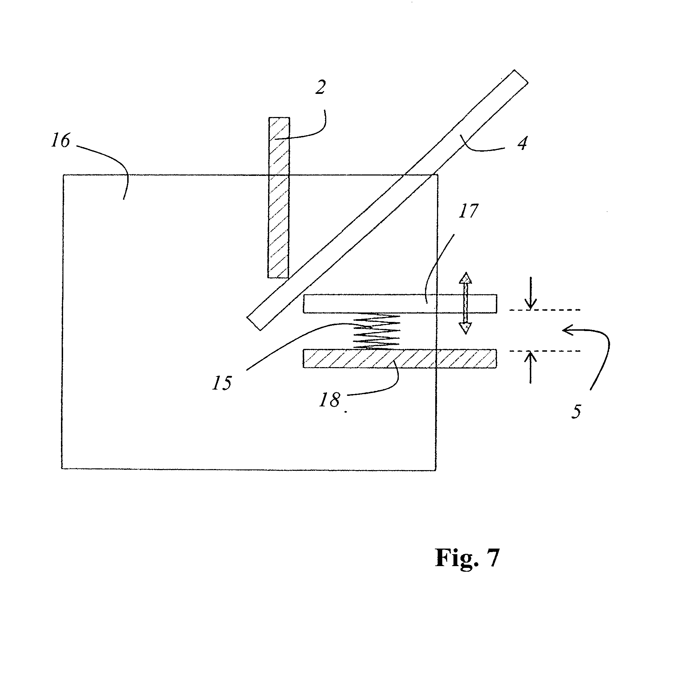

Fig. 7 zeigt eine Detaildarstellung einer weiteren erfindungsgemäßen Vorrichtung, die außer einem relativ zu einer Profilauflage 16 unbeweglichen Profilanschlag 2 einen innerhalb eines Toleranzbereichs - gegen die Kraft einer Federvorrichtung 15 - relativ zu einer Profilauflage 16 beweglichen Profilanschlag 17 aufweist. Auf der Profilauflage 16 ist eine Konsole 18 - relativ zur Profilauflage 16 - ortsfest montiert, die als Basis für die federelastische Lagerung des beweglichen Profilanschlags 17 dient. Zusätzlich wird ein (nicht dargestellter) Heizspiegel analog dem beweglichen Profilanschlag 17 innerhalb des Toleranzbereiches positioniert.

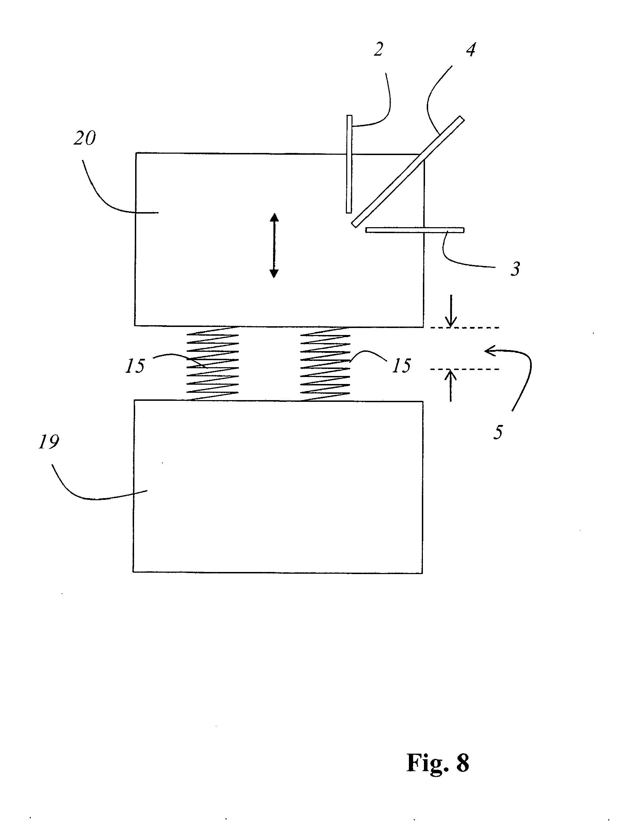

Fig. 8 zeigt eine Detaildarstellung einer anderen erfindungsgemäßen Vorrichtung, bei der der Schweißkopf einen Antriebsschlitten 19 und einen relativ zu dem Antriebsschlitten 19 innerhalb des Toleranzbereichs gegen die Kraft einer Federvorrichtung 15 beweglichen Auflageschlitten 20 aufweist. Der Schweißkopf kann mit Hilfe des Antriebsschlittens 19 in einer Schweißsollposition (6) positioniert werden.
Der Auflageschlitten 20 positioniert sich selbsttätig und automatisch innerhalb des Toleranzbereiches (5) indem er sich an dem in die Vorrichtung eingelegten Profilteil (in dieser Figur nicht dargestellt) abdrückt.

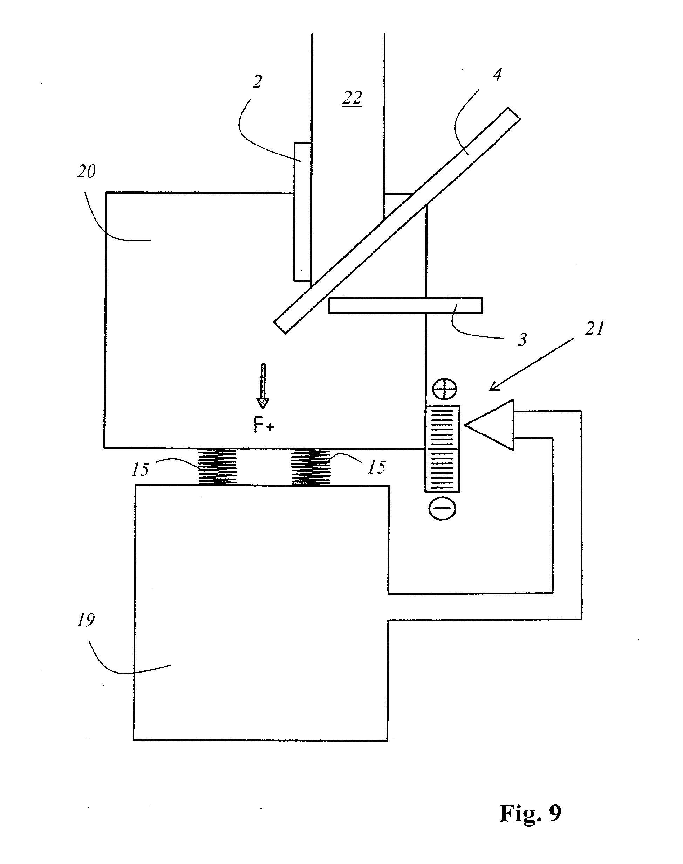

Fig. 9 zeigt eine Detaildarstellung der anderen, bereits in Fig. 8 dargestellten erfindungsgemäßen Vorrichtung mit einem eingelegten, zu langen Profilteil 8. Die gezeigte Vorrichtung weist eine Maßabweichungsanzeige 21 auf, die im Wesentlichen eine relativ zum Auflageschlitten 20 ortsfeste Skala und einen relativ zum Antriebsschlitten 19 ortsfesten Zeiger aufweist. Die Mitte der Skala markiert die Sollposition. Die Enden der Skale markieren den Rand des Toleranzbereichs. An der Maßabweichungsanzeige 21 ist ersichtlich, dass das eingelegte Profilteil auf Grund seiner Überlänge den Auflageschlitten 20 innerhalb des Toleranzbereichs gegen die Rückstellkraft der Federvorrichtung 15 in Richtung auf den Antriebsschlitten 19 verschoben hat.

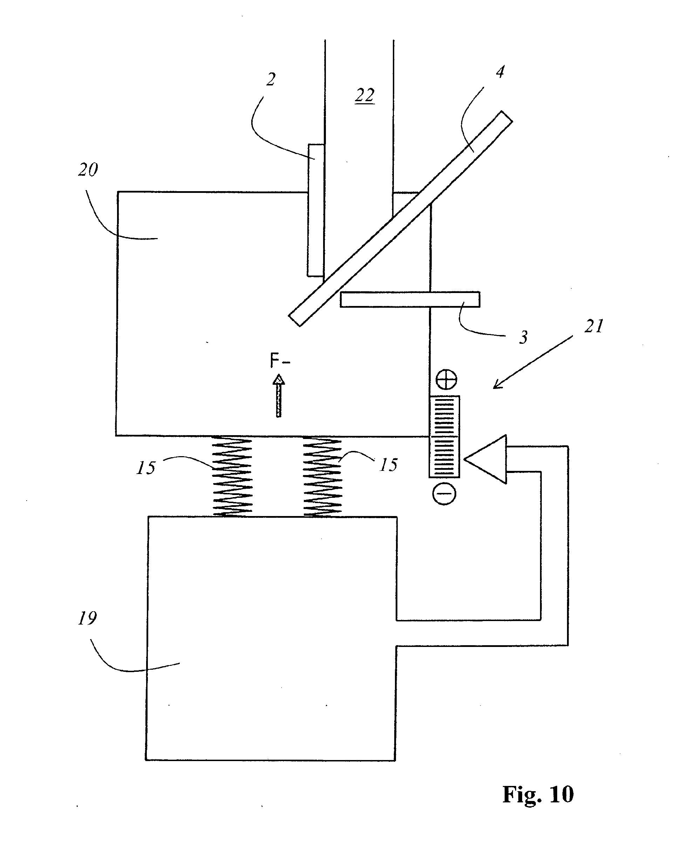

Fig. 10 zeigt eine Detaildarstellung der anderen, bereits in den Fig. 8 und 9 dargestellten erfindungsgemäßen Vorrichtung mit einem eingelegten, zu kurzen Profilteil 8. An der Maßabweichungsanzeige 21 ist ersichtlich, dass der Auflageschlitten 20 von der Federvorrichtung 15 innerhalb des Toleranzbereichs in Richtung auf den Antriebsschlitten 19 verschoben wurde, bis der Profilanschlag 4 an dem eingelegten, zu kurzen Profilteil 8 zur Anlage gekommen ist.

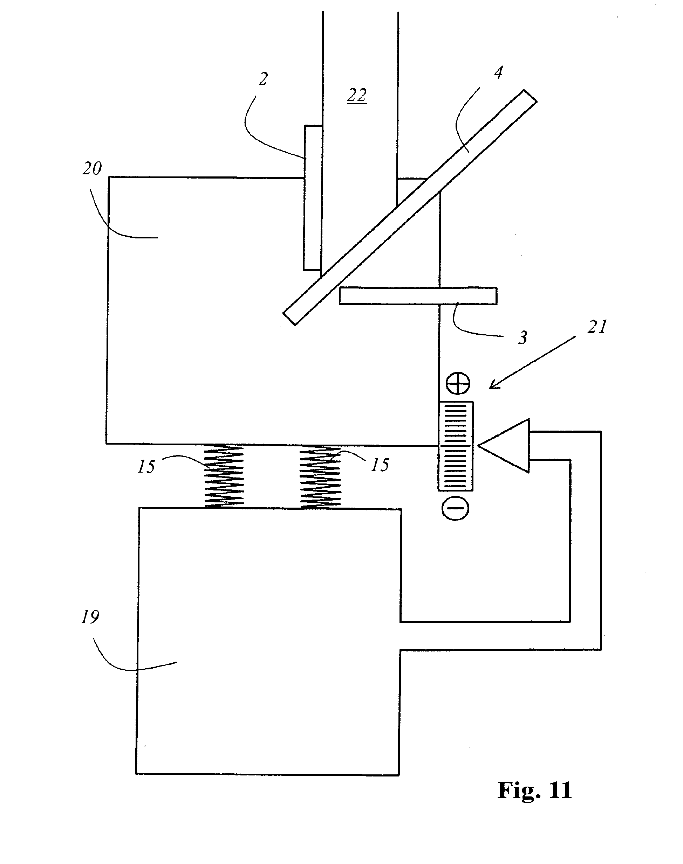

Fig. 11 zeigt eine Detaildarstellung der anderen, bereits in den Fig. 8, 9 und 10 dargestellten erfindungsgemäßen Vorrichtung mit einem eingelegten, maßgenauen Profilteil 8. An der Maßabweichungsanzeige 21 ist ersichtlich, dass der Auflageschlitten 20 sich samt den Profilanlagen 2, 3 und dem Profilanschlag 4 in der Sollposition befindet.

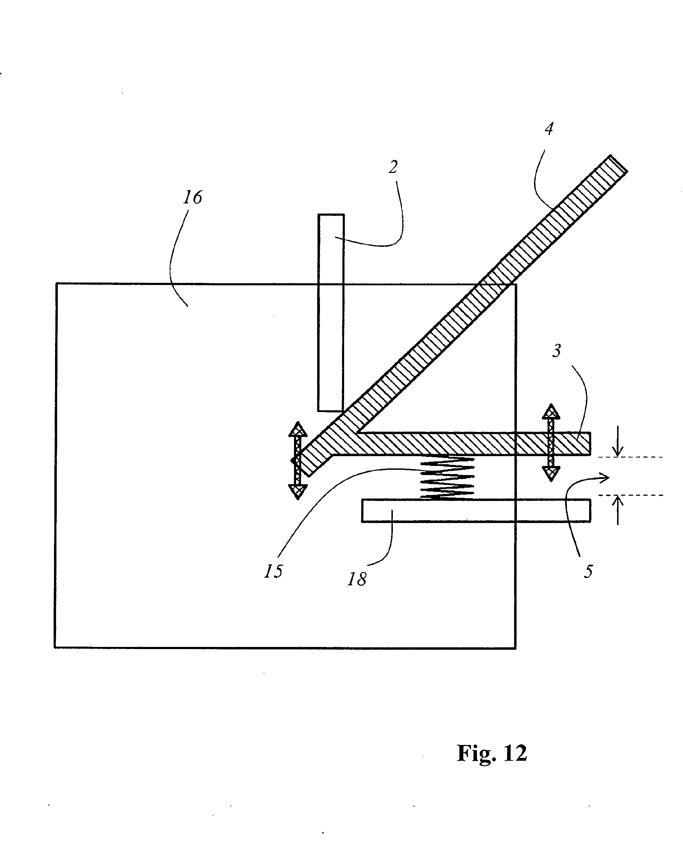

Fig. 12 zeigt eine Detaildarstellung einer besonderen erfindungsgemäßen Vorrichtung, bei der der Profilanschlag 4 fest mit einer Profilanlage 3 verbunden ist und beide gemeinsam relativ zu einer Profilauflage 16 beweglich angeordnet sind. Auf der Profilauflage 16 ist eine Konsole 18 - relativ zur Profilauflage 16 - ortsfest montiert, die als Basis für die federelastische Lagerung des beweglichen Profilanschlags 17 dient. Der Profilanschlag 4 und die Profilanlage 3 sind innerhalb eines Toleranzbereichs gegen die Kraft einer Federvorrichtung 15 linear verschiebbar gelagert.

Bei sämtlichen beispielhaft in den Figuren beschriebenen Ausführungsformen kann zusätzlich vorteilhaft vorgesehen sein, dass der Schweißprozess, insbesondere der Prozess des Anschmelzens und/oder der Prozess des Fügens, derart gesteuert ist, dass auf den zunächst in einem Toleranzbereich um eine Schweißsollposition 6 positionierten Schweißkopf 1, 9 oder auf Teile des Schweißkopfes 1, 9 während des Anschmelzens und/oder während des Fügens eine in Richtung auf die Sollposition 6 gerichtete Kraft wirkt, um zumindest eine Maßabweichung eines Profilteils 8 von einem Sollmaß zumindest zu verringern oder vollständig zu beseitigen.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Schweißkopf
- 2: Seitliche Profilanlage
- 3: Seitliche Profilanlage
- 4: Profilanschlag
- 5: Toleranzbereich
- 6: Schweißsollposition
- 7: tatsächliche Positionierung
- 8: Profilteile
- 9: erster Schweißkopf
- 10: X-Y-Tisch
- 11: Grundtisch
- 12: Kreuztisch
- 13: Erster Antrieb
- 14: Zweiter Antrieb
- 15: Federvorrichtung
- 16: Profilauflage
- 17: Beweglicher Profilanschlag
- 18: Konsole
- 19: Antriebsschlitten
- 20: Auflageschlitten
- 21: Maßabweichungsanzeige

## Patentansprüche

1. Vorrichtung zum Verschweißen von Profilteilen (8), insbesondere von Kunststoffprofilteilen, mit zumindest einem Schweißkopf (1), der relativ zu einem anderen Schweißkopf (1, 9) und/oder relativ zu einer Haltevorrichtung in eine vorgegebene oder vorgebbare Schweißsollposition (6) positionierbar ist, **dadurch gekennzeichnet, dass** der Schweißkopf (1) und/oder ein Teil des Schweißkopfes (1), zumindest jedoch ein Heizelement des Schweißkopfes zum Anschmelzen der Profilteile, insbesondere ein Heizspiegel, in Abhängigkeit von zumindest einer Maßabweichung zumindest eines der Profilteile (8) von einem Sollmaß in einem Toleranzbereich (5) um die Schweißsollposition (6) beweglich und automatisch oder selbsttätig positionierbar sind.

2. Vorrichtung nach Anspruch 1, **dadurch gekennzeichnet, dass**
a. die Größe des Toleranzbereichs (5) vorgebbar und/oder einstellbar ist und/oder dass
b. dass eine mechanische und/oder optische und/oder elektronische Tastvorrichtung zur Erfassung der zumindest einen Maßabweichung vorgesehen ist.

3. Vorrichtung nach einem der Ansprüche 1 bis 2, **dadurch gekennzeichnet, dass** eine Positioniereinrichtung zum Positionieren des Schweißkopfes (1) und/oder des Teils des Schweißkopfes (1) in der Schweißsollposition (6) vorgesehen ist.

4. Vorrichtung nach einem der Ansprüche 1 bis 3, **dadurch gekennzeichnet, dass** der Schweißkopf (1) und/oder der Teil des Schweißkopfes (1) zumindest innerhalb des Toleranzbereichs (5) relativ zur Positioniereinrichtung und/oder relativ zur Schweißsollposition (6) beweglich gelagert ist.

5. Vorrichtung nach einem der Ansprüche 1 bis 4, **dadurch gekennzeichnet, dass**
a. der Schweißkopf (1) und/oder der Teil des Schweißkopfes (1) zumindest innerhalb des Toleranzbereichs (5) gegen die Kraft einer Federvorrichtung (15) relativ zur Schweißsollposition (6) und/oder relativ zur Positioniereinrichtung beweglich ist und/oder dass der Schweißkopf (1) und/oder der Teil des Schweißkopfes (1) zumindest innerhalb des Toleranzbereichs (5) federelastisch gelagert ist und/oder dass
b. der Schweißkopf (1) und/oder der Teil des Schweißkopfes (1) zumindest innerhalb des Toleranzbereichs (5) gegen die Kraft einer Federvorrichtung (15) relativ zur Schweißsollposition (6) und/oder relativ zur Positioniereinrichtung beweglich ist und/oder dass der Schweißkopf (1) und/oder der Teil des Schweißkopfes (1) zumindest innerhalb des Toleranzbereichs (5) federelastisch gelagert ist, wobei sich der Schweißkopf (1) und/oder der Teil des Schweißkopfes (1) zur Positionierung innerhalb des Toleranzbereiches (5) an zumindest einem in die Vorrichtung eingelegten Profilteil (8) abdrückt und/oder abstützt.

6. Vorrichtung nach Anspruch 5, **dadurch gekennzeichnet, dass** die Vorrichtung eine federelastisch gelagerte Profilanlage (2, 3) aufweist und/oder dass die Vorrichtung eine innerhalb des Toleranzbereichs - insbesondere gegen die Kraft einer Federvorrichtung (15) -relativ zu einer Profilauflage (16) und/oder relativ zur Schweißsollposition (6) bewegliche Profilanlage (2, 3) aufweist.

7. Vorrichtung nach einem der Ansprüche 1 bis 6, **dadurch gekennzeichnet, dass** der Schweißkopf (1) einen Antriebsschlitten (19) und einen relativ zu dem Antriebsschlitten (19) innerhalb des Toleranzbereichs (5) - insbesondere gegen die Kraft einer Federvorrichtung (15) - beweglichen Auflageschlitten (20) aufweist.

8. Vorrichtung nach einem der Ansprüche 6 oder 7, **dadurch gekennzeichnet, dass** die Profilanlage (2, 3) und/oder der Auflageschlitten (20) geführt, insbesondere lineargeführt, gelagert sind.

9. Vorrichtung nach einem der Ansprüche 1 bis 8, **dadurch gekennzeichnet, dass** - a. die Vorrichtung mehrere Schweißköpfe (1) aufweist, die jeweils relativ zu einem anderen Schweißkopf (1, 9) und/oder relativ zu einer Haltevorrichtung in unterschiedlichen, vorgegebenen oder vorgebbaren Schweißsollpositionen (6) positionierbar oder beweglich sind, wobei die Schweißköpfe (1) und/oder der Teil des Schweißkopfes (1) jeweils in Abhängigkeit von zumindest einer Maßabweichung zumindest eines der Profilteile (8) in jeweils einem räumlichen Toleranzbereich (5) um die Schweißsollposition (6) positionierbar oder beweglich sind und/oder dass b. die Vorrichtung mehrere Schweißköpfe (1, 9) aufweist, wobei einer der Schweißköpfe (9) ortsfest angeordnet ist und/oder anordenbar ist und wobei die übrigen Schweißköpfe (1) und/oder jeweils ein Teil der übrigen Schweißköpfe (1) jeweils in Abhängigkeit von zumindest einer Maßabweichung zumindest eines der Profilteile (8) von einem Sollmaß in jeweils einem räumlichen Toleranzbereich (5) um jeweils eine Schweißsollposition (6) positionierbar und/oder beweglich sind.

10. Verfahren zum Verschweißen von Profilteilen (8), insbesondere von Kunststoffprofilteilen, **gekennzeichnet durch** folgende Schritte:
a. Festlegen einer Schweißsollposition (6) für einen Schweißkopf und/oder eines Teils des Schweißkopfes,
b. Positionieren des Schweißkopfes (1) oder des Teils des Schweißkopfes, jedoch zumindest eines Heizelementes, insbesondere eines Heizspiegels, in einem vorgegebenen oder vorgebbaren Toleranzbereich (5) um die Schweißsollposition (6), wobei der Abstand des Schweißkopfs (1) bzw. der Teile des Schweißkopfes (1) zu der Schweißsollposition (6) von zumindest einer Maßabweichung eines Profilteiles von einem Sollmaß abhängt,
c. Anschmelzen der zu verschweißenden Profilteile (8) und
d. Aneinanderfügen der angeschmolzenen Profilteile (8).

11. Verfahren nach Anspruch 10, **dadurch gekennzeichnet, dass**
a. während des Schweißprozesses, insbesondere während des Anschmelzens und/oder des Fügens, auf den zunächst in einem Toleranzbereich um eine Schweißsollposition (6) positionierten Schweißkopf (1) bzw. den Teil des Schweißkopfes (1) eine in Richtung auf die Sollposition (6) gerichtete Kraft ausgeübt wird, um zumindest eine Maßabweichung eines Profilteils (8) zumindest zu verringern oder vollständig zu beseitigen und/oder dass
b. während des Schweißprozesses, insbesondere während des Anschmelzens und/oder des Fügens, auf die jeweils zunächst in einem Toleranzbereich um ihre Schweißsollpositionen (6) positionierten Schweißköpfe (1) bzw. die Teile der Schweißköpfe (1) jeweils eine in Richtung auf die jeweilige Sollposition (6) gerichtete Kraft ausgeübt wird, zumindest eine Maßabweichung eines Profilteils (8) von einem Sollmaß zumindest zu verringern oder vollständig zu beseitigen.

12. Verfahren nach einem der Ansprüche 10 oder 11, **dadurch gekennzeichnet, dass**
a. der Schweißprozess, insbesondere das Anschmelzen und/oder das Fügen, derart gesteuert wird, dass der zunächst in einem Toleranzbereich um die Schweißsollposition (6) positionierte Schweißkopf (1) bzw. der Teil des Schweißkopfes (1) während des Anschmelzens - insbesondere am Ende des Anschmelzens- und/oder während des Fügens - insbesondere am Ende des Fügens - seine Schweißsollposition (6) erreicht bzw. erreichen oder sich dieser zumindest nähert bzw. nähern und/oder dass
b. dass der Schweißprozess, insbesondere das Anschmelzen und/oder das Fügen, derart gesteuert wird, dass die jeweils zunächst in einem Toleranzbereich um ihre Schweißsollpositionen (6) positionierten Schweißköpfe (1) bzw. die Teile der Schweißköpfe (1) während des Anschmelzens - insbesondere am Ende des Anschmelzens - und/oder während des Fügens - insbesondere am Ende des Fügens - ihre Schweißsollposition (6) erreichen oder sich dieser zumindest nähern.

13. Verwendung einer Vorrichtung nach einem der Ansprüche 1 bis 9 zum Verschweißen von Profilteilen (8).

14. Verwendung nach Anspruch 13 in einem Verfahren nach einem der Ansprüche 10 bis 12.

## Claims

1. Device for welding profiled parts (8), in particular plastic profiled parts, having at least one welding head (1) which is positionable in relation to another welding head (1, 9) and/or in relation to a holding device into a predetermined or predeterminable welding nominal position (6), **characterized in that** the welding head (1) and/or part of the welding head (1), but at least one heating element of the welding head for melting the profiled parts, in particular a heating plate, depending on at least one dimensional deviation of at least one of the profiled parts (8) from a nominal dimension, are/is movable in a tolerance range (5) about the welding nominal position (6) and positionable in an automatic or self-acting manner.

2. Device according to Claim 1, **characterized in that**
a. the size of the tolerance range (5) is predeterminable and/or adjustable and/or **in that**
b. a mechanical and/or optical and/or electronic sensing device for detecting the at least one dimensional deviation are/is provided.

3. Device according to one of Claims 1 and 2, **characterized in that** a positioning unit for positioning the welding head (1) and/or the part of the welding head (1) in the welding nominal position (6) are/is provided.

4. Device according to one of Claims 1 to 3, **characterized in that** the welding head (1) and/or the part of the welding head (1) are movably mounted at least within the tolerance range (5) in relation to the positioning unit and/or in relation to the welding nominal position (6).

5. Device according to one of Claims 1 to 4, **characterized in that**
a. the welding head (1) and/or the part of the welding head (1) are/is movable at least within the tolerance range (5) counter to the force of a spring device (15) in relation to the welding nominal position (6) and/or in relation to the positioning unit and/or **in that** the welding head (1) and/or the part of the welding head (1) is resiliently mounted at least within the tolerance range (5) and/or **in that**
b. the welding head (1) and/or the part of the welding head (1) are/is movable at least within the tolerance range (5) counter to the force of a spring device (15) in relation to the welding nominal position (6) and/or in relation to the positioning unit and/or **in that** the welding head (1) and/or the part of the welding head (1) are/is resiliently mounted at least within the tolerance range (5), wherein for positioning within the tolerance range (5) the welding head (1) and/or the part of the welding head (1) is pushed away and/or are/is supported on at least one profiled part (8) which is inserted into the device.

6. Device according to Claim 5, **characterized in that** the device comprises a resiliently mounted profile support (2, 3) and/or **in that** the device comprises a profile support (2, 3) which is movable within the tolerance range - in particular counter to the force of a spring device (15) - in relation to a profile support (16) and/or in relation to the welding nominal position (6).

7. Device according to one of Claims 1 to 6, **characterized in that** the welding head (1) comprises a drive slide (19) and a support slide (20) which is movable within the tolerance range (5) in relation to the drive slide (19) - in particular counter to the force of a spring device (15).

8. Device according to one of Claims 6 and 7, **characterized in that** the profile support (2, 3) and/or the support slide (20) are mounted in a guided manner, in particular in a linearly guided manner.

9. Device according to one of Claims 1 to 8, **characterized in that**
a. the device comprises a plurality of welding heads (1) which are each positionable or moveable in relation to another welding head (1, 9) and/or in relation to a holding device into various, predetermined or predeterminable welding nominal positions (6), wherein the welding heads (1) and/or the part of the welding head (1) are/is each positionable or moveable, depending on at least one dimensional deviation of at least one of the profiled parts (8), each in one spatial tolerance range (5) around the welding nominal position (6), and/or **in that**
b. the device comprises a plurality of welding heads (1, 9), wherein one of the welding heads (9) is disposed and/or disposable in a locationally fixed manner and wherein the remaining welding heads (1) and/or each part of the remaining welding heads (1), depending each on at least one dimensional deviation of at least one of the profiled parts (8) from a nominal value, are each positionable and/or movable in a spatial tolerance range (5) each around a welding nominal position (6).

10. Method for welding profiled parts (8), in particular plastic profiled parts, **characterized by** the following steps:
a. determining a welding nominal position (6) for a welding head and/or part of the welding head,
b. positioning the welding head (1) or part of the welding head, but at least one heating element, in particular a heating plate, in a predetermined or predeterminable tolerance range (5) around the welding nominal position (6), wherein the spacing of the welding head (1) or the parts of the welding head (1), respectively, from the welding nominal position (6) depends on at least one dimensional deviation of a profiled part from a nominal dimension,
c. melting of the profiled parts (8) to be welded, and
d. joining the melt profiled parts (8).

11. Method according to Claim 10, **characterized in that**
a. during the welding process, in particular during melting and/or joining, in order to at least reduce or to completely eliminate at least one dimensional deviation of a profiled part (8), a force which is directed towards a nominal position (6) is exerted on the welding head (1) or the part of the welding head (1), respectively, which is initially positioned in a tolerance range around the welding nominal position (6), and/or **in that**
b. during the welding process, in particular during melting and/or joining, in order to at least reduce or to completely eliminate at least one dimensional deviation of a profiled part (8) from a nominal dimension, a force which is directed towards the respective nominal position (6) is exerted each on the welding heads (1) or the parts of the welding heads (1), respectively, which are each initially positioned in a tolerance range around the welding nominal positions thereof (6).

12. Method according to one of Claims 10 and 11, **characterized in that**
a. the welding process, in particular melting and/or joining, are/is controlled in such a manner that the welding head (1) or the part of the welding head (1), respectively, which is initially positioned in a tolerance range around the welding nominal position (6) reaches its welding nominal position (6) or reach their welding nominal positions (6), respectively, during melting - in particular at the end of melting - and/or during joining - in particular at the end of joining -, or at least come or comes close thereto, respectively, and/or
b. in the welding process, in particular melting and/or joining, are/is controlled in such a manner that the welding heads (1) or the parts of the welding heads (1), respectively which are each initially positioned in a tolerance range about their welding nominal positions (6) reach their welding nominal position (6) during melting - in particular at the end of melting - and/or during joining - in particular at the end of joining -, or at least come close thereto.

13. Use of a device according to one of Claims 1 to 9 for welding profiled parts (8).

14. Use according to Claim 13 in a method according to one of Claims 10 to 12.

## Revendications

1. Dispositif de soudage de pièces profilées (8), en particulier de pièces profilées en matière plastique, avec au moins une tête de soudage (1), qui peut être positionnée dans une position de soudage théorique prédéterminée ou pré-déterminable par rapport à une autre tête de soudage (1, 9) et/ou par rapport à un dispositif de maintien, **caractérisé en ce que** la tête de soudage (1) et/ou une partie de la tête de soudage (1), cependant au moins un élément chauffant de la tête de soudage pour la fusion des pièces profilées, en particulier un miroir chauffant, peuvent être positionnés de façon mobile autour de la position de soudage théorique (6) et de façon automatique ou automotrice en fonction d'au moins un écart de dimension d'au moins une des pièces profilées (8) par rapport à une dimension théorique dans une plage de tolérance (5).

2. Dispositif selon la revendication 1, **caractérisé en ce que**
a. la grandeur de la plage de tolérance (5) peut être prédéterminée et/ou réglée et/ou **en ce que**
b. il est prévu un dispositif de balayage mécanique et/ou optique et/ou électronique pour la détection dudit au moins un écart de dimension.

3. Dispositif selon une des revendications 1 à 2, **caractérisé en ce qu'**il est prévu un dispositif de positionnement pour le positionnement de la tête de soudage (1) et/ou de la partie de la tête de soudage (1) dans la position de soudage théorique (6).

4. Dispositif selon l'une quelconque des revendications 1 à 3, **caractérisé en ce que** la tête de soudage (1) et/ou la partie de la tête de soudage (1) est montée de façon mobile, au moins à l'intérieur d'une plage de tolérance (5), par rapport au dispositif de positionnement et/ou par rapport à la position de soudage théorique (6).

5. Dispositif selon l'une quelconque des revendications 1 à 4, **caractérisé en ce que**
a. la tête de soudage (1) et/ou la partie de la tête de soudage (1) est mobile, au moins à l'intérieur de la plage de tolérance (5), contre la force d'un dispositif de ressort (15) par rapport à la position de soudage théorique (6) et/ou par rapport au dispositif de positionnement et/ou **en ce que** la tête de soudage (1) et/ou la partie de la tête de soudage (1) est montée de façon suspendue élastiquement au moins à l'intérieur de la plage de tolérance (5) et/ou **en ce que**
b. la tête de soudage (1) et/ou la partie de la tête de soudage (1) est mobile, au moins à l'intérieur de la plage de tolérance (5), contre la force d'un dispositif de ressort (15) par rapport à la position de soudage théorique (6) et/ou par rapport au dispositif de positionnement et/ou **en ce que** la tête de soudage (1) et/ou la partie de la tête de soudage (1) est montée de façon suspendue élastiquement au moins à l'intérieur de la plage de tolérance (5), dans lequel la tête de soudage (1) et/ou la partie de la tête de soudage (1) presse et/ou s'appuie, pour le positionnement à l'intérieur de la plage de tolérance (5), sur au moins une pièce profilée (8) introduite dans le dispositif.

6. Dispositif selon la revendication 5, **caractérisé en ce que** le dispositif présente un support de profilé (2, 3) à suspension élastique et/ou **en ce que** le dispositif présente un support de profilé (2, 3) mobile à l'intérieur de la plage de tolérance - en particulier contre la force d'un dispositif de ressort (15) - par rapport à un appui de profilé (16) et/ou par rapport à la position de soudage théorique (6).

7. Dispositif selon l'une quelconque des revendications 1 à 6, **caractérisé en ce que** la tête de soudage (1) présente un chariot d'entraînement (19) et un chariot d'appui (20) mobile par rapport au chariot d'entraînement (19) à l'intérieur de la plage de tolérance (5) - en particulier contre la force d'un dispositif de ressort (15).

8. Dispositif selon l'une des revendications 6 ou 7, **caractérisé en ce que** le support de profilé (2, 3) et/ou le chariot d'appui (20) sont montés de façon guidée, en particulier de façon guidée linéairement.

9. Dispositif selon l'une quelconque des revendications 1 à 8, **caractérisé en ce que**
a. le dispositif présente plusieurs têtes de soudage (1), qui peuvent respectivement être positionnées ou déplacées par rapport à une autre tête de soudage (1, 9) et/ou par rapport à un dispositif de maintien dans différentes positions de soudage théoriques prédéterminées ou pré-déterminables, dans lequel les têtes de soudage (1) et/ou la partie de la tête de soudage (1) peuvent être positionnées ou déplacées respectivement en fonction d'au moins un écart de dimension d'au moins une des pièces profilées (8) chaque fois dans une plage de tolérance spatiale (5) autour de la position de soudage théorique (6) et/ou **en ce que**
b. le dispositif présente plusieurs têtes de soudage (1, 9), dans lequel une des têtes de soudage (9) est et/ou peut être disposée en position fixe et dans lequel les autres têtes de soudage (1) et/ou respectivement une partie des autres têtes de soudage (1) peuvent être positionnées et/ou déplacées respectivement en fonction d'au moins un écart de dimension d'au moins une des pièces profilées (8) par rapport à une dimension théorique dans une plage de tolérance spatiale respective (5) chaque fois autour d'une position de soudage théorique (6).

10. Procédé pour le soudage de pièces profilées (8), en particulier de pièces profilées en matière plastique, **caractérisé par** les étapes suivantes:
a. définir une position de soudage théorique (6) pour une tête de soudage et/ou une partie de la tête de soudage,
b. positionner la tête de soudage (1) ou de la partie de la tête de soudage, cependant au moins un élément chauffant, en particulier un miroir chauffant, dans une plage de tolérance prédéterminée ou pré-déterminable (5) autour de la position de soudage théorique (6), dans lequel la distance entre la tête de soudage (1) ou les parties de la tête de soudage (1) et la position de soudage théorique (6) dépend d'au moins un écart de dimension d'une pièce profilée par rapport à une dimension théorique,
c. amorcer la fusion des pièces profilées à souder (8), et
d. joindre l'une à l'autre les pièces profilées fondues (8).

11. Procédé selon la revendication 10, **caractérisé en ce que**
a. pendant l'opération de soudage, en particulier pendant la fusion et/ou la jonction, on exerce sur la tête de soudage (1) ou la partie de la tête de soudage (1) d'abord positionnée dans une plage de tolérance autour d'une position de soudage théorique (6) une force dirigée en direction de la position théorique (6), afin au moins de réduire ou d'éliminer complètement un écart de dimension d'une pièce profilée (8) et/ou **en ce que**
b. pendant l'opération de soudage, en particulier pendant la fusion et/ou la jonction, on exerce sur les têtes de soudage (1) ou sur les parties des têtes de soudage (1) respectivement positionnées d'abord dans une plage de tolérance autour de leurs positions de soudage théoriques (6) une force dirigée en direction de la position théorique respective (6), afin au moins de réduire ou d'éliminer complètement un écart de dimension d'une pièce profilée (8) par rapport à une dimension théorique.

12. Procédé selon une des revendications 10 ou 11, **caractérisé en ce que**
a. on commande l'opération de soudage, en particulier la fusion et/ou la jonction, de telle manière que la tête de soudage (1) ou la partie de la tête de soudage (1) positionnée d'abord dans une plage de tolérance autour de la position de soudage théorique (6) atteigne pendant la fusion - en particulier à la fin de la fusion - et/ou pendant la jonction - en particulier à la fin de la jonction - sa position de soudage théorique (6) ou au moins s'approche de celle-ci et/ou **en ce que**
b. on commande l'opération de soudage, en particulier la fusion et/ou la jonction, de telle manière que les têtes de soudage (1) ou les parties des têtes de soudage (1) respectivement positionnées d'abord dans une plage de tolérance autour de leurs positions de soudage théoriques (6) atteignent pendant la fusion - en particulier à la fin de la fusion - et/ou pendant la jonction - en particulier à la fin de la jonction - leur position de soudage théorique (6) ou au moins s'approchent de celle-ci.

13. Utilisation d'un dispositif selon l'une quelconque des revendications 1 à 9 pour le soudage de pièces profilées (8).

14. Utilisation selon la revendication 13 dans un procédé selon l'une quelconque des revendications 10 à 12.
